# DEMANDE DE BREVET EUROPEEN

(11) **EP 0 658 892 A1**
(43) Date de publication de la demande: **21.06.1995**
(21) Numéro de dépôt: 94402909.9
(22) Date de dépôt: 16.12.1994
(51) Int. Cl.: G11B 11/10

(54) **Matériau composite pour l'enregistrement magnéto-optique, sa préparation et son utilisation**

(30) Priorité: 17.12.1993 FR 9315258
(71) Demandeur: ATG-CYGNET, F-31047 Toulouse Cédex (FR)
(72) Inventeur: Tailhades, Philippe, F-31400 Toulouse (FR); Bonino, Jean-Pierre, F-31320 Pechabou (FR); Pasquet, Isabelle, F-31520 Ramonville (FR); Presmanes, Lionel, F-65000 Tarbes (FR); Bouet, Laurence, F-31000 Toulouse (FR); Rousset, Abel, F-31520 Ramonville St Agne (FR); Langlade, Patrick, F-31830 Plaisance du Touch (FR)
(74) Mandataire: Tonnellier, Jean-Claude

(57) **Abrégé**

Matériau composite pour l'enregistrement magnéto-optique, comprenant une couche mince déposée sur un substrat solide non magnétique. Ladite couche mince est une couche polycristalline constituée de micro-cristaux ayant une structure de ferrite spinelle lacunaire, à base de fer, de cobalt et de métaux de transition. Grâce à un procédé particulier d'élaboration des couches minces, permettant notamment de faire croître les dimensions des cristallites, il est possible d'optimiser les propriétés magnétiques et magnéto-optiques, et d'obtenir des couches minces présentant par exemple une rotation Faraday rémanente et un champ coercitif supérieurs, respectivement, à 1 degré par micromètre pour la rotation Faraday et à 1000 Oe pour le champ coercitif.

## Description

L'invention a pour objet un matériau composite pour l'enregistrement magnéto-optique, comprenant une couche mince magnétique déposée sur un substrat solide, sa préparation et son utilisation.

On sait que le stockage d'informations sous forme numérique est réalisé à l'aide d'éléments d'information binaires, ou bits, souvent symbolisés par les nombres 0 et 1. Les matériaux magnétiques sous forme de poudres ou de couches minces peuvent être utilisés pour stocker une telle information. Actuellement, les recherches s'orientent de plus en plus vers la réalisation de supports d'enregistrement magnétique utilisant les propriétés magnéto-optiques (MO) des substances ferromagnétiques ou ferrimagnétiques, qui permettent notamment d'effectuer des enregistrements de très haute densité.

Sur les supports d'enregistrement magnéto-optique, les bits d'information sont écrits en aimantant positivement ou négativement (c'est-à-dire dans un sens ou dans le sens opposé) de petites zones du matériau magnétique qui constituent la couche dite sensible. Les deux directions possibles de l'aimantation constituent les deux états (0 et 1) de l'information binaire. On sait que les dispositifs d'enregistrement MO utilisent le phénomène de rotation du plan de polarisation de la lumière par les matériaux magnétiques soit par transmission (effet Faraday), soit par réflexion sur une couche de matériau réflecteur après traversée de la couche sensible, ce qui équivaut à un double effet Faraday, intéressant puisque la rotation Faraday dépend de l'épaisseur de matériau aimanté traversée par la lumière.

Pour la lecture des informations enregistrées, on analyse la rotation du plan de polarisation d'un faisceau laser ayant traversé la zone aimantée. Le sens de la rotation du plan de polarisation est fonction du signe de l'aimantation rémanente de la zone traversée.

On sait que l'application d'un champ magnétique extérieur à un matériau ferro- ou ferri-magnétique permet de représenter le cycle d'hystérésis (courbes représentant les variations du champ induit en fonction du champ appliqué) dont les intersections avec l'axe des ordonnées correspondent à l'aimantation rémanente et les intersections avec l'axe des abscisses donnent la valeur du champ coercitif. On obtient des cycles d'hystérésis analogues en mesurant la rotation magnéto-optique (rotation Faraday) en fonction du champ appliqué.

Il est évident que la couche sensible d'un dispositif MO doit, comme tous les matériaux d'enregistrement magnétique, posséder un fort champ coercitif pour conserver les informations enregistrées en évitant les effacements accidentels, et doit accepter de fortes densités de stockage. Elle doit aussi présenter une rotation magnéto-optique rémanente élevée pour fournir un signal d'intensité satisfaisante. Enfin, pour permettre l'écriture malgré l'existence d'un champ coercitif élevé, il faut que le champ coercitif soit fortement dépendant de la température, ou que la température de Curie soit peu élevée.

En effet, pour éviter l'emploi de têtes magnétiques devant frotter ou survoler de très près la surface de la couche sensible, et afin de vaincre le champ coercitif (Hc) élevé, l'écriture est réalisée par un procédé thermo-magnétique consistant à chauffer à l'aide d'un faisceau laser la zone à aimanter, tout en appliquant à distance le champ magnétique inducteur de l'aimantation. L'élévation de la température engendre une diminution de Hc au-dessous de la valeur du champ appliqué, qui devient alors suffisante pour effectuer l'écriture.

Les matériaux pour l'enregistrement MO doivent en outre présenter un faible état de cristallisation, c'est-à-dire une structure microcristalline, de la couche sensible, pour ne pas engendrer un "bruit de média" trop élevé. Si les dimensions des cristallites sont trop élevées, on observe un "bruit de média" important, mais les dimensions des cristallites doivent être suffisantes pour éviter les phénomènes de superparamagnétisme.

En outre, il est nécessaire que les matériaux magnéto-optiques présentent une très bonne stabilité des propriétés MO au cours du temps, ce qui implique notamment une stabilité chimique et cristallographique importante.

On sait que les matériaux à structure de ferrites spinelles lacunaires présentent des propriétés magnétiques potentiellement intéressantes dans le domaine de l'enregistrement magnétique; voir par exemple les brevets français 2 180 575, 2 587 990 et 2 650 115. On sait que la structure de spinelle est notamment celle de la magnétite Fe₃O₄, qui est un oxyde mixte (FeO, Fe₂O₃). L'oxydation de la magnétite conduit au sesquioxyde de fer (Fe₂O₃), qui conserve la structure cristalline de la magnétite jusqu'à la température de 460°C. La structure d'un tel sesquioxyde de fer est en réalité une structure de spinelle lacunaire car l'oxydation des ions ferreux présents dans l'oxyde mixte (Fe₃O₄) conduit à l'expulsion d'une partie des ions fer hors des sites qu'ils occupaient dans le cristal de Fe₃O₄, pour maintenir l'équilibre des charges électriques dans le réseau formé par les ions oxygène O²⁻ qui se comporte comme un réseau rigide. Le cristal du produit oxydé comporte alors des sites vacants ou lacunes. Les composés appelés ferrites spinelles sont généralement représentés sous la forme MFe₂O₄ où M est un métal divalent, par référence à la formule du spinelle MgAl₂O₄. Un tel spinelle est dit aussi "spinelle stoechiométrique". Pour représenter les ferrites spinelles lacunaires en gardant dans la formule un nombre d'atomes métalliques égal à 3, on est amené à écrire leur formule sous la forme :

MₓFe₃₋ₓO₄₊ₜ

où M représente au moins un métal capable de présenter des états de valence multiples et t représentant un nombre positif, non nul. Une autre façon de représenter le ferrite spinelle lacunaire est d'écrire sa formule sous une forme équivalente faisant mention des lacunes :

MₓFe_{3-x-y}□_{y}O₄

le symbole "□" représentant les lacunes.

Il est évident qu'en introduisant dans les ferrites spinelles divers substituants constitués par des métaux ayant des états de valence multiples, il est possible de faire varier le nombre des lacunes ; voir par exemple les brevets cités ci-dessus.

Il semblerait *a priori* intéressant de réaliser des couches minces à base de ferrites spinelles lacunaires pour l'enregistrement MO. Toutefois, l'élaboration de couches minces satisfaisantes à l'aide de tels matériaux soulève des difficultés techniques importantes. Les méthodes de dépôt de couches minces fournissent des couches qui n'ont pas nécessairement la structure de spinelle, et dont la régularité et les dimensions des cristallites sont difficiles à maîtriser. Par exemple la pulvérisation cathodique donne des cristallites de taille trop faible.

Grâce à la conception d'un procédé original d'élaboration de couches minces de ferrites spinelles lacunaires, on a découvert que, de façon surprenante, il est possible d'obtenir des couches minces ayant des dimensions de cristallites satisfaisantes, et qui présentent des propriétés MO intéressantes, nettement supérieures à celles des poudres de même composition, ce qui permet d'utiliser de telles couches minces comme couches sensibles dans les dispositifs d'enregistrement MO. On a découvert que la taille moyenne des cristallites peut être réglée plus facilement lorsque la couche mince a une composition proche du ferrite "stoechiométrique" (correspondant à t=0 dans la formule donnée ci-dessus). On a découvert qu'en fait il est possible de régler la taille des cristallites soit en effectuant le dépôt de la couche mince dans des conditions réductrices, par exemple par pulvérisation cathodique en présence d'une certaine proportion d'hydrogène, soit en effectuant, après le dépôt, un traitement en présence d'un gaz non oxydant (neutre ou réducteur), comme on le verra plus en détail ci-après. Bien entendu, dans les deux cas, il convient d'effectuer ensuite un traitement d'oxydation pour obtenir finalement dans la couche mince une structure de ferrite spinelle lacunaire.

On a découvert également que l'étape de réglage de la taille moyenne des cristallites permet d'optimiser les propriétés MO, qui augmentent avec la taille des cristallites, dans une gamme de tailles qui peut être facilement déterminée dans chaque cas par de simples expériences de routine. Il devient ainsi possible, après restauration des propriétés magnétiques grâce à la formation de lacunes par une étape d'oxydation, de sélectionner les compositions et/ou les traitements permettant d'obtenir des couches minces ayant les propriétés souhaitées, en particulier une rotation Faraday rémanente au moins égale à une valeur-seuil prédéterminée (généralement non inférieure à 1 degré par micromètre), et un champ coercitif non inférieur à 1000 Oe. On a en effet découvert que les tailles des cristallites restent stables lors de l'étape d'oxydation. On a découvert en outre que les propriétés MO sont encore améliorées lorsque l'oxydation de la couche mince est effectuée de façon non homogène, ce qui peut être réalisé de diverses façons : soit par oxydation incomplète de la couche mince (oxydation en surface) en limitant le temps d'oxydation ou la pression partielle du gaz oxydant, soit par oxydation complète de la couche mince suivie d'une réduction partielle en surface. Dans le premier cas, ce sont les zones voisines de la face opposée à celle au contact du substrat qui sont les plus oxydées, et inversement dans le second cas.

La présente invention a donc pour objet un matériau composite pour l'enregistrement magnéto-optique, comprenant une couche mince déposée sur un substrat solide non magnétique, caractérisé par le fait que ladite couche mince est une couche polycristalline constituée de micro-cristaux ayant une structure de ferrite spinelle lacunaire, que la composition chimique de ladite couche mince, en dehors d'agents dopants éventuellement présents, répond à la formule brute (I):

CO²⁺ₓM_{y}M'_{z}Fe³⁺_{3-x-y-z}O²⁻₄₊ₜ (I)

dans laquelle :
M représente un cation d'au moins un métal susceptible d'avoir plusieurs degrés d'oxydation, choisi parmi Mn, Mo, V, W, Cr, Cu, Fe et les terres rares,
M' représente un cation d'au moins un métal choisi parmi Zn, Ti et Al,
x, y, z et (4+t) sont des nombres représentant les quantités d'atomes Co, M, M' et O, respectivement,
x peut varier de 0,4 à 2,2 et en particulier de 0,5 à 2,
y peut varier de 0,05 à 0,5 et en particulier de 0,1 à 0,2,
z peut varier de 0 à 0,5,
étant entendu que la somme (x+y+z) n'est pas supérieure à 2,5, et en particulier n'est pas supérieure à 2,
t est un nombre positif, non nul,
que ladite couche mince est formée de cristallites dont les dimensions moyennes, mesurées par microscopie électronique à transmission ou par diffraction des rayons X, sont dans la gamme de 10 à 30nm environ,
et que ladite couche mince présente une rotation Faraday rémanente et un champ coercitif supérieurs, respectivement, à une valeur prédéterminée, d'au moins 1 degré par micromètre pour la rotation Faraday et d'au moins 1000 Oe, en particulier d'au moins 1500 Oe, pour le champ coercitif.

La valeur moyenne de t, dans la formule (I), dépend notamment de la nature des métaux à états de valence multiples et des conditions du traitement d'oxydation destiné à créer les lacunes dans la structure spinelle. La détermination de t ne présente aucun intérêt en pratique, l'essentiel étant d'améliorer les propriétés magnétiques et MO par la création de lacunes, et éventuellement, en outre, par oxydation inhomogène. On pense que t est généralement compris entre 0,05 et 0,5 environ. En fait, la mention de t dans l'expression du nombre d'atomes d'oxygène de la formule brute (I) a surtout une valeur d'information qualitative, car elle permet de comprendre immédiatement que la formule brute (I) représente un ferrite spinelle substitué lacunaire.

On appelle "cristallites" les microcristaux constituant la couche mince. Ce sont des domaines cristallins qui diffractent de manière cohérente les rayons X. Autrement dit, ce sont des monocristaux dont les dimensions moyennes peuvent être facilement déterminées, notamment par les méthodes indiquées ci-dessus.

Le substrat solide sur lequel est déposée la couche mince est par exemple un disque. Il peut être en matériau transparent tel qu'un verre dans le cas où le dispositif d'enregistrement MO fonctionne avec la source de lumière du côté du substrat. Dans ce cas, le matériau composite de l'invention est destiné à recevoir en outre une couche d'un matériau réflecteur, notamment un réflecteur métallique, déposé sur la face opposée à celle en contact avec le substrat de la couche mince aimantée, lorsqu'on souhaite analyser la lumière du même côté du substrat que la source, pour bénéficier du double effet Faraday.

Le substrat solide peut également être un substrat réflecteur, ou peut contenir une couche de réflecteur déposée sur un substrat, avec le couche mince déposée sur la couche de réflecteur, dans le cas où la source de lumière et les moyens de lecture se trouvent, dans le dispositif MO utilisé pour la lecture, du côté opposé à celui du substrat.

On peut utiliser un substrat préformaté, ou encore effectuer un formatage après le dépôt de la couche sensible.

Dans les matériaux de formule (I), le cobalt permet notamment d'obtenir un Hc fortement dépendant de la température. Les métaux M', dont la présence est facultative, ont notamment la propriété d'abaisser la température de Curie. Grâce à la teneur en cobalt, et grâce à la structure de ferrite spinelle lacunaire apportée par les éléments M de la formule (I), les couches minces aimantées de l'invention sont caractérisées notamment par une rotation Faraday importante. Grâce au procédé qui est à l'origine de l'invention, il est possible en fait de faire varier la rotation Faraday et/ou Hc par réglage des dimensions des cristallites, par variation du nombre de lacunes et éventuellement par oxydation non homogène de la couche mince. On peut ainsi obtenir et sélectionner une couche mince ayant une rotation Faraday au moins égale à une valeur prédéterminée, et éventuellement éliminer, par de simples expériences de routine, les compositions ou les traitements qui ne conviendraient pas.

Il en va bien entendu de même pour le champ coercitif.

Dans la formule (I), conformément aux usages, le fer représenté par le symbole Fe est du fer trivalent, et lorsque M représente le fer, M désigne alors du fer divalent. On sait qu'il est en effet possible d'obtenir des ferrites spinelles lacunaires mixtes contenant à la fois du fer divalent et du fer trivalent; voir notamment les brevets cités ci-dessus.

La limitation concernant la somme (x+y+z), dans la formule (I), est due au fait que la composition doit contenir suffisamment de fer notamment pour que la température de Curie de la couche mince ne soit pas trop faible.

Parmi les terres rares que peut représenter M, on citera en particulier celles ayant un rayon ionique voisin de 1 Angström (10⁻¹⁰ m), et notamment Dy, Gd, Tb, Sm, Nd, Er, Ho, Tm et Ce (IV).

D'une façon générale, les compositions de ferrite spinelle lacunaire peuvent être modifiées par des agents dopants, qui ne sont pas représentés par la formule (I). Les agents dopants ne sont pas des substituants, c'est-à-dire qu'ils ne font pas partie du réseau cristallin. L'utilisation d'un grand nombre d'agents dopants, dans le but de modifier certaines propriétés des matériaux magnétiques, a été décrite. L'utilisation des agents dopants a par exemple pour but de faciliter la régulation de la cristallisation ou le développement d'une anisotropie de croissance cristalline. Généralement, les agents dopants sont présents dans une proportion pondérale ne dépassant pas 1 % en poids, par rapport au poids de ferrite spinelle lacunaire de formule (I). Les agents dopants sont par exemple le silicium, le phosphore, le bore, les métaux alcalins ou alcalino-terreux, etc.

Comme indiqué précédemment, la couche mince du matériau composite de l'invention présente avantageusement un gradient d'oxydation, ce qui se traduit dans la formule (I) par des valeurs de t pouvant être différentes pour des cristaux situés à des profondeurs différentes dans la couche mince. Selon des modes de réalisation particuliers, déjà mentionnées ci-dessus, le nombre t caractérisant l'état d'oxydation des cristaux peut soit augmenter soit diminuer lorsque la distance par rapport au substrat augmente.

L'invention a également pour objet un procédé de préparation d'un matériau tel que défini précédemment.

Ce procédé est caractérisé par le fait :
- que l'on dépose sur ledit substrat, selon les méthodes connues, une couche mince d'oxydes des métaux Co, M, M' et Fe, dans des proportions atomiques respectives x, y, z et (3-x-y-z), x, y, et z étant des nombres tels que définis précédemment, ainsi que les adjuvants éventuels,
- que l'on soumet ladite couche mince à un traitement thermique, en atmosphère réductrice ou neutre, destiné à faire croître les dimensions des cristallites aux dimensions souhaitées,
- que l'on soumet ensuite ladite couche mince à un traitement thermique en atmosphère oxydante, jusqu'à obtention d'une couche mince ayant une structure de ferrite spinelle lacunaire,
- et que l'on sélectionne les couches minces ayant le champ coercitif et la rotation Faraday rémanente désirés.

Cette dernière étape revient à ne pas retenir les compositions de couches minces et les traitements qui ne sont pas satisfaisants, c'est-à-dire qui ne permettent pas d'atteindre les valeurs de rotation Faraday et de champ coercitif indiqués plus haut. En effet, s'il est certain que le procédé de l'invention a une valeur générale et permet dans tous les cas, après éventuelle mise au point par simple expérimentation de routine, d'améliorer les propriétés des couches minces déposées sur le substrat, il ne peut évidemment être garanti que toutes les compositions donneront des couches minces satisfaisant aux conditions énoncées ci-dessus concernant la rotation Faraday et le champ coercitif. Mais il est certain également que le procédé de l'invention permet d'obtenir pour la première fois des couches minces de ferrites spinelles substitués lacunaires ayant de telles valeurs de rotation Faraday et de champ coercitif, et que la possibilité d'obtention, et même la possibilité d'existence de telles couches minces, ne pouvaient pas être prévues.

Le dépôt de la couche mince sur le substrat peut être effectué par exemple par pulvérisation cathodique radiofréquence, par ablation laser, etc., au départ d'une cible obtenue de façon classique par frittage d'un mélange de poudres des oxydes métalliques et éventuellement des adjuvants (ces derniers étant éventuellement sous forme d'oxydes).

Ces méthodes de dépôt sont bien connues et leur principe ne sera pas rappelé ici.

L'épaisseur optimale de la couche mince, qui est le plus souvent comprise entre 200 et 400 nm environ, peut être déterminée dans chaque cas par expérimentation préalable, car l'intensité du signal magnéto-optique dépend aussi du substrat et du réflecteur, et varie en outre de façon périodique avec l'épaisseur de la couche sensible.

Pour mettre en oeuvre le traitement destiné à faire croître la taille moyenne des cristallites, il convient de préférence d'opérer dans des conditions permettant de transformer la couche mince en une couche ayant la structure et la composition d'un spinelle "stoechiométrique", ou une composition voisine. On a en effet découvert que c'est dans cet état que l'on peut favoriser le plus aisément la recristallisation de la couche mince.

Le réglage de la taille moyenne des cristallites peut être effectué à l'aide d'un traitement thermique à une température et pendant un temps suffisants pour que la taille moyenne des cristallites devienne elle-même suffisante pour permettre d'obtenir, sur le produit final (couche mince à structure de spinelle lacunaire), les propriétés magnétiques et MO souhaitées. Ce traitement thermique peut être mis en oeuvre de deux façons :
- lorsque la couche mince déposée présente spontanément une structure de spinelle, on peut effectuer le traitement thermique soit en atmosphère réductrice, soit en atmosphère neutre (ni oxydante ni réductrice) car on a observé que généralement un traitement thermique en atmosphère neutre suffit alors à conserver une composition proche de la stoechiométrie, mais on peut aussi opérer, le cas échéant, en atmosphère réductrice;
- lorsque la couche mince déposée n'a pas la structure de spinelle, le traitement thermique est effectué en atmosphère réductrice pour transformer la composition de la couche mince en une composition correspondant au spinelle stoechiométrique, ou une composition voisine, grâce à quoi la couche mince s'organise alors spontanément en structure spinelle, et la recristallisation s'effectue alors aisément, comme signalé ci-dessus.

Comme atmosphère neutre, on peut utiliser par exemple de l'azote, et comme atmosphère réductrice, des mélanges d'azote et d'hydrogène. Il est facile de déterminer expérimentalement la pression partielle d'hydrogène qui convient, suffisante pour aboutir à une composition proche du spinelle stoechiométrique, mais inférieure à celle pour laquelle on observerait l'apparition d'une phase d'oxyde différente de la phase spinelle, ou d'une phase métallique.

Ici encore, il est facile de déterminer les conditions et les durées de traitement qui permettent d'obtenir les tailles moyennes optimales de cristallites qui correspondent aux propriétés magnétiques et magnéto-optiques optimales souhaitées pour le produit final (couche mince à structure de spinelle lacunaire).

De préférence, le traitement destiné à faire croître la taille des cristallites est effectué en présence de vapeur d'eau qui favorise l'obtention rapide d'un état d'équilibre.

La température du traitement est généralement comprise entre 150 et 500°C.

D'une façon générale, les températures de traitement doivent évidemment être supportables pour le substrat.

On peut, aussi, lorsque la méthode de dépôt utilisée s'y prête, effectuer le dépôt en atmosphère réductrice, par exemple par pulvérisation cathodique en atmosphère d'argon contenant de l'hydrogène en proportions convenables. Dans ce cas, le traitement destiné à améliorer les dimensions moyennes des cristallites peut être un traitement thermique en atmosphère neutre (azote par exemple), et est effectué après le dépôt de la couche mince.

L'étape suivante permettant de restaurer la structure lacunaire, et donc en particulier le champ coercitif et la rotation Faraday, est une étape de traitement thermique en présence d'un gaz oxydant à une température suffisante pour permettre l'obtention d'une structure lacunaire. On opère par exemple à une température de 150 à 500°C, en particulier de 300 à 475°C. On a découvert que ce traitement ne modifie pas de façon mesurable la taille des cristallites et ne compromet donc pas l'obtention d'un matériau ayant les propriétés souhaitées.

On peut opérer soit à l'air soit dans un mélange gazeux contenant de l'oxygène, par exemple un mélange d'oxygène et d'azote.

Le temps de traitement est celui qui, à la température de traitement choisie, permet d'obtenir les valeurs souhaitées pour la rotation Faraday et le champ coercitif. Ici encore, ce temps peut être déterminé par des expérimentations de routine.

En faisant varier la pression partielle d'oxygène, la température de traitement et/ou le temps de traitement, il est possible d'oxyder la couche mince de façon non homogène, comme indiqué ci-dessus, ce qui améliore généralement les propriétés magnéto-optiques.

L'invention a également pour objet l'utilisation du matériau composite tel que défini précédemment comme support pour l'enregistrement magnéto-optique. Un tel matériau est utilisable pour la mise en oeuvre de l'enregistrement MO selon les méthodes connues. Bien entendu, le matériau composite subira les traitements habituels (dépôt éventuel d'une couche de réflecteur, dépôt d'une couche de protection, etc.) dépendant du type de dispositif MO utilisé. On peut aussi réaliser un formatage tel qu'un formatage optique ou magnéto-optique.

Cette utilisation est mise en oeuvre en utilisant les procédés classiques d'enregistrement et de lecture magnéto-optiques connues en soi. Pour l'enregistrement d'une information magnéto-optique, on chauffe la zone à aimanter de la couche sensible par un faisceau laser focalisé (spot de surface inférieure, par exemple, à 1 µm²) et de puissance suffisamment élevée, par exemple 10 mW, pour abaisser le champ coercitif en-dessous du champ appliqué, ou pour chauffer au-dessus de la température de Curie de façon à annuler temporairement le champ coercitif, tout en appliquant un champ magnétique suffisamment élevé pour aimanter, dans le sens voulu, la zone chauffée. Pour la lecture, on dirige sur la zone à lire de la couche sensible un faisceau laser polarisé de faible puissance, par exemple 2 à 3 mW, et on détermine selon les méthodes connues le sens de la rotation du plan de polarisation de la lumière, après traversée de la couche sensible (par exemple pour le faisceau réfléchi), et donc le signe de l'aimantation de la zone analysée.

Les exemples suivants illustrent l'invention.

### EXEMPLE 1 : Couches minces de ferrite de cobalt et de molybdène

Pour l'élaboration des couches minces de ferrite mixte de cobalt et de molybdène, on a préparé des mélanges d'oxyde de fer, de cobalt et de molybdène par coprécipitation, puis oxydation des hydroxydes correspondants en milieu basique (NH₄OH). On maintient la suspension à 70°C pendant quatre jours sous barbotage d'air pour faire grossir les particules. Après lavage et séchage, la poudre obtenue est chauffée à 800°C à l'air pour diminuer la surface spécifique (chamottage).

Après refroidissement, on mélange la poudre avec un liant organique (alcool polyvinylique) dans les proportions (en masse) suivantes : 80 % de ferrite, 16 % d'eau et 4 % d'alcool polyvinylique.

Le mélange est mis en forme dans une matrice de diamètre 100 mm à l'aide d'une presse hydraulique. La charge appliquée lors du pressage est de 50 MPa. Le frittage est effectué à 970°C pendant deux heures sous atmosphère d'azote, ce qui permet d'éviter la formation et la sublimation de l'oxyde de MoO₃ qui se forme lors d'un traitement thermique à l'air.

Après un refroidissement à une vitesse de 60°C/h un nouveau frittage est effectué à 1200°C pendant une heure sous une charge de 25 MPa, afin d'aplanir la céramique.

La pulvérisation cathodique est effectuée avec un bâti de pulvérisation Alcatel CIT du type A450, utilisé en mode radio-fréquence. Les substrats utilisés pour caractériser les couches minces déposées étaient des lames de verre classiques. Les substrats destinés aux mesures magnéto-optiques et aux tests d'écriture étaient des lames de verre optiquement isotrope de 1,2 mm d'épaisseur. Ces substrats sont préalablement dégraissés dans une solution d'acide nitrique puis dans un mélange sulfochromique.

Le dépôt par pulvérisation cathodique est effectué dans des conditions indiquées ci-après. Les substrats sont soumis préalablement à un décapage ionique d'ions argon (0,5 Pa) pendant 20 minutes.

Le dépôt est effectué à température non supérieure à 450°C pour éviter la déformation des substrats de verre. Les conditions de dépôt sont les suivantes :
Plasma d'argon
Pression d'enceinte : 0,5 Pa
Distance cible-substrat : 50 mm
Densité de puissance R.F. : 4 W/cm²
La vitesse de dépôt est voisine de 9,7 nm/min
Epaisseur du dépôt : 320 nm.

On effectue ensuite un traitement thermique sous atmosphère réductrice, à 450°C pendant 3 h dans une atmosphère composée de 85 % d'azote, 9 % d'eau et 6 % d'hydrogène.

L'analyse montre que la couche mince est constituée essentiellement d'une phase spinelle correspondant au ferrite spinelle stoechiométrique de formule :

Mo_{0.1}Co_{0.9}Fe₂O₄

présentant les caractéristiques suivantes :
Rotation Faraday : 0,5 degré/µm
Taille moyenne des cristallites : 23 nm.

Après traitement thermique à 450°C pendant 15 h, à l'air, on obtient une structure de spinelle lacunaire présentant les caractéristiques suivantes :
Rotation Faraday :1,0 degré/µm
Hc : 2600 Oe

En effectuant la pulvérisation cathodique en atmosphère d'argon en présence de 0,5 % d'oxygène, la couche mince obtenue a essentiellement une structure de spinelle. Toutefois, pour améliorer les propriétés magnéto-optiques, il convient par exemple d'effectuer ensuite les traitements de réduction puis d'oxydation décrits ci-dessus.

### EXEMPLE 2 : Couche mince de ferrite de cobalt et de manganèse

On prépare un ferrite de cobalt et de manganèse à partir d'hydroxydes de manière analogue à celle décrite à l'exemple 1. On obtient un ferrite de formule :

Mn_{0,13}Co_{0,73}Fe_{2,14}O₄

On traite d'abord la poudre à 900°C à l'air pour diminuer la surface spécifique de la poudre (opération de chamottage).

Cette poudre est mélangée avec un liant comme décrit à l'exemple 1, puis compactée sous une charge uniaxiale de 50 MPa. Le frittage de la céramique est effectué à l'air à 1200°C.

On effectue la pulvérisation cathodique en atmosphère d'argon. Le substrat est un verre de 1,2 mm d'épaisseur. Les conditions sont les mêmes que celles décrites à l'exemple 1. Les épaisseurs de couches déposées sont comprises entre 250 et 350 nm.

L'analyse des dépôts bruts par diffraction des rayons X révèle la présence d'une seule phase spinelle.

Le dosage chimique (par absorption atomique et fluorescence X) des couches minces obtenues montre que les films bruts ont bien la composition du ferrite mixte de départ. La stoechiométrie (état d'oxydation) n'a pas été étudiée.

Sur les échantillons obtenus on a effectué divers recuits à une température de 450°C : à l'air, sous atmosphère d'azote et sous atmosphère réductrice (89 % d'azote, 2 % d'hydrogène et 9 % d'eau).

Dans chaque cas la structure de spinelle est conservée (ce n'est pas le cas pour le traitement réducteur, à la température indiquée, lorsque la teneur en hydrogène est supérieure à 2 %).

Les tailles moyennes des cristallites, évaluées selon la méthode de Scherrer, sont respectivement de 15, 18 et 26 nm pour les mélanges recuits à l'air, sous atmosphère d'azote et sous atmosphère réductrice, respectivement.

Avec les échantillons étudiés précédemment, recuits puis oxydés dans les mêmes conditions, à 450°C pendant 6 h à l'air, et donc dans le même état d'oxydation, il a été possible de comparer les propriétés magnéto-optiques en fonction des tailles moyennes des cristallites, qui restent stables pendant l'oxydation.

On a observé que le champ coercitif et la rotation Faraday augmentent lorsque les dimensions moyennes des cristallites passe de 15 à 25 nm environ.

C'est ainsi que la rotation Faraday rémanente atteint 2,2 degrés/µm pour des tailles de cristallites de 25 nm et une longueur d'onde de 780 nm. Le coefficient d'absorption de la couche est de 20 000 cm⁻¹.

Dans le domaine de longueurs d'onde 400-500 nm, les rotations Faraday sont optimales et atteignent des valeurs proches de 3,5 degrés/µm.

En outre, certains échantillons traités sous atmosphère réductrice ont été portés à des températures comprises entre 50 et 475°C pendant 2 h, à l'air. On a constaté ici encore que lors du traitement d'oxydation, la taille des cristallites n'est pas modifiée. On observe, après oxydation, une augmentation du champ coercitif et de la rotation Faraday, mesurés à température ambiante, pour les échantillons traités entre 200 et 450°C, et une décroissance du champ coercitif pour les échantillons traités au-delà de 450°C environ.

De façon analogue, on a préparé des couches minces de composition suivante:

Mn_{0.13}Co₀_{.73}Zn_{0.30}Fe_{1.84}O₄₊ₜ

### EXEMPLE 3 : Elaboration de couches Co_{0,75}Mn_{0,5}Fe_{1,75}O₄₊ₜ

(a) Dépôt par pulvérisation cathodique radio-fréquence à l'aide d'un plasma d'argon (pression d'enceinte 0,5 Pa) d'une couche de ferrite spinelle de 390 nm d'épaisseur. La cible est une céramique de formule :

   Co_{0,75}Mn_{0,5}Fe_{1,75}O₄

   et de structure spinelle, la puissance de dépôt appliquée à la cible est de 4 W/cm², le temps de pulvérisation est de 53 min, le substrat est du verre de 1,2 mm d'épaisseur.
(b) La couche est traitée sous atmosphère réductrice (Azote 77 %, H₂ 11 %, H₂O 12 %) à 475°C pendant 3 heures.
(c) La couche traitée en (b) est enfin oxydée à 475°C pendant 10 heures. On obtient alors un film ferrimagnétique de type spinelle, de formule indiquée, possédant un champ coercitif de 3050 Oe, et une rotation Faraday rémanente à 780 nm de 0,46 degré (soit 1,2 degré/µm).

### EXEMPLE 4 : Test d' enregistrement-lecture

De façon analogue à celle décrite à l'exemple 3, on a préparé des couches minces de ferrite de manganèse et de cobalt contenant le cobalt, le manganèse et le fer dans les mêmes proportions que celles données à l'exemple 3. Les substrats sont des plaques de verre isotrope ayant une épaisseur de 1,2 mm. Les couches minces déposées ont une épaisseur de 350 nm. Après les étapes de réduction et d'oxydation, on dépose sur la couche mince une couche de réflecteur métallique aluminium ou titane.

A l'aide d'essais successifs permettant d'optimiser les propriétés de l'ensemble verre/ferrite/réflecteur, on a déterminé que les meilleurs résultats, pour la rotation Faraday, sont obtenus avec une couche de 32 nm d'aluminium ou une couche de 60 nm de titane.

Le banc d'écriture-lecture comprend une source laser qui émet un rayonnement monochromatique polarisé (longueur d'onde : 780 nm) dans un plan perpendiculaire à la surface de l'échantillon. La source laser peut fonctionner en continu pour la lecture, et aussi en mode pulsé, grâce à un générateur de fréquence, pour l'écriture. Le champ magnétique appliqué, perpendiculaire au plan de l'échantillon, est obtenu grâce à deux aimants permanents mobiles capables d'appliquer des champs opposés. La lumière traverse le substrat, puis la couche sensible, et est réfléchie par le réflecteur. La détection du signal s'effectue sur le faisceau réfléchi, celui-ci étant discriminé du faisceau incident par un cube séparateur. Un prisme analyseur décompose le faisceau réfléchi, à la sortie du cube séparateur, en vibrations polarisées suivant deux directions orthogonales. Deux photodiodes reçoivent chacune l'une des vibrations et sont reliées à un amplificateur. Lorsque les intensités lumineuses reçues sont égales, la tension U délivrée par l'amplificateur est nulle : cette position correspond au réglage du "zéro". A chacune des directions du champ appliqué correspond une tension U₀ (bit 0) et U₁ (bit 1). Le signal de lecture est la valeur absolue de la différence de ces tensions : il est proportionnel à la rotation Faraday rémanente de la couche sensible.

La rotation Faraday rémanente de la couche de ferrite utilisée pour les essais était de 0,7 degré.

Le champ magnétique appliqué était de 3300 Oe.

Temps d'impulsion lumineuse : 50 nanosecondes.

Dimension du spot laser : 1 µm.

Pour les échantillons soumis à une puissance d'écriture de 10 mW le signal peut aller de 1 V à 3 V lorsque la puissance de lecture varie de 2 à 4 W. Pour une puissance d'écriture de 18 mW, le signal peut aller de 3 à 7 V lorsque la puissance de lecture varie de 2 à 4 W.

## Revendications

1. Matériau composite pour l'enregistrement magnéto-optique, comprenant une couche mince déposée sur un substrat solide non magnétique, caractérisé par le fait que ladite couche mince est une couche polycristalline constituée de micro-cristaux ayant une structure de ferrite spinelle lacunaire, que la composition chimique de ladite couche mince, en dehors d'agents dopants éventuellement présents, répond à la formule brute (I) :
Co²⁺ₓM_{y}M^{'}_{z}Fe³⁺_{3-x-y-z}O²⁻₄₊ₜ (I)
dans laquelle :
M représente un cation d'au moins un métal susceptible d'avoir plusieurs degrés d'oxydation, choisi parmi Mn, Mo, V, W, Cr, Cu, Fe et les terres rares,
M' représente un cation d'au moins un métal choisi parmi Zn, Ti et Al,
x, y, z et (4+t) sont des nombres représentant les quantités d'atomes Co, M, M' et O, respectivement,
x peut varier de 0,4 à 2,2 et en particulier de 0,5 à 2,
y peut varier de 0,05 à 0,5,
z peut varier de 0 à 0,5,
étant entendu que la somme (x+y+z) n'est pas supérieure à 2,5, et en particulier n'est pas supérieure à 2,
t est un nombre positif, non nul,
que ladite couche mince est formée de cristallites dont les dimensions moyennes, mesurées par microscopie électronique à transmission ou par diffraction des rayons X, sont dans la gamme de 10 à 30nm environ,
et que ladite couche mince présente une rotation Faraday rémanente et un champ coercitif supérieurs, respectivement, à une valeur prédéterminée, d'au moins 1 degré par micromètre pour la rotation Faraday et d'au moins 1000 Oe, en particulier d'au moins 1500 Oe, pour le champ coercitif.

2. Matériau composite selon la revendication 1, caractérisé par le fait que la composition de ladite couche mince présente un gradient d'oxydation.

3. Matériau composite selon la revendication 1 ou 2, caractérisé par le fait que ladite couche mince est déposée sur un substrat transparent, sur un substrat réflecteur ou sur une couche réflectrice déposée sur un substrat.

4. Procédé de préparation d'un matériau tel que défini dans l'une quelconque des revendications précédentes, caractérisé par le fait:
- que l'on dépose sur ledit substrat, selon les méthodes connues, une couche mince d'oxydes des métaux Co, M, M' et Fe, dans des proportions atomiques respectives x, y, z et (3-x-y-z), x, y, et z étant des nombres tels que définis dans la revendication 1, ainsi que les adjuvants éventuels,
- que l'on soumet ladite couche mince à un traitement thermique, en atmosphère réductrice ou neutre, destiné à faire croître les dimensions des cristallites aux dimensions souhaitées,
- que l'on soumet ensuite ladite couche mince à un traitement thermique en atmosphère oxydante, jusqu'à obtention d'une couche mince ayant une structure de ferrite spinelle lacunaire,
- et que l'on sélectionne les couches minces ayant le champ coercitif et la rotation Faraday rémanente désirés.

5. Procédé selon la revendication précédente, caractérisé par le fait que l'on dépose ladite couche mince par pulvérisation cathodique ou par ablation laser.

6. Procédé selon l'une quelconque des revendications 4 et 5, caractérisé par le fait que l'on effectue ledit dépôt en atmosphère réductrice.

7. Procédé selon l'une quelconque des revendications 4 et 5, caractérisé par le fait que lorsque la composition de la couche mince est proche de la composition d'un ferrite spinelle stoechiométrique, le traitement destiné à faire croître les dimensions des cristallites est effectué en atmosphère neutre ou réductrice.

8. Procédé selon la revendication précédente, caractérisé par le fait que, lorsque la couche mince déposée n'a pas la structure de spinelle, le traitement destiné à faire croître les dimensions des cristallites est effectué en atmosphère réductrice.

9. Procédé selon l'une quelconque des revendications 4 à 8, caractérisé par le fait que le traitement destiné à faire croître les dimensions des cristallites est effectué à une température dans la gamme de 150 à 500°C environ.

10. Procédé selon l'une quelconque des revendications 4 à 9, caractérisé par le fait que ladite atmosphère réductrice contient de l'hydrogène.

11. Procédé selon l'une quelconque des revendications 4 à 10, caractérisé par le fait que ladite atmosphère oxydante contient de l'oxygène.

12. Procédé selon l'une quelconque des revendications 4 à 11, caractérisé par le fait que le traitement en atmosphère oxydante est effectué à une température dans la gamme de 150 à 500°C.

13. Utilisation du matériau composite tel que défini dans l'une quelconque des revendications 1 à 3, comme support pour l'enregistrement magnéto-optique.
